# EUROPÄISCHE PATENTANMELDUNG

(11) **EP 2 093 456 A2**
(43) Veröffentlichungstag der Anmeldung: **26.08.2009**
(21) Anmeldenummer: 09002000.9
(22) Anmeldetag: 13.02.2009
(51) Int. Cl.: F16F 13/26

(54) **Hydrolager**

(30) Priorität: 22.02.2008 DE 102008010618
(71) Anmelder: Carl Freudenberg KG, 69469 Weinheim (DE)
(72) Erfinder: Hirsch, Volker, 67346 Speyer (DE); Sommer, Eberhard, 69483 Waldmichelbach (DE)

(57) **Zusammenfassung**

Hydrolager (1), umfassend ein Auflager (2) und eine Traglager (3), die durch einen Federkörper (4) miteinander verbunden sind und einen mit Dämpfungsflüssigkeft befüllten ersten Raum (5) begrenzen, wobei der erste Raum (5) über einen durch eine Verstelleinrichtung (6) verstellbaren Kanal (7) mit einem zweiten Raum (8) verbunden ist, wobei die Verstelleinrichtung (6) in nur zwei Schaltstellungen verfahrbar ist.

## Beschreibung

### Technisches Gebiet

Die Erfindung betrifft ein Hydrolager, umfassend ein Auflager und eine Traglager, die durch einen Federkörper miteinander verbunden sind und einen mit Dämpfungsflüssigkeit befüllten ersten Raum begrenzen, wobei der erste Raum über einen durch eine Verstelleinrichtung verstellbaren Kanal mit einem zweiten Raum verbunden ist.

### Stand der Technik

Derartige Hydrolager sind aus der DE 39 33 252 C2 bekannt. Das vorbekannte Hydrolager weist eine Verstelleinrichtung auf, mittels der der Querschnitt und Länge eines des Kanals verändert werden kann. Dadurch ist es möglich ein hydraulisch gedämpftes Lager mit einer Dämpfung zu erhalten welches frequenzabhängig einstellbar ist. Dies ist insbesondere bei Verbrennungsmotoren vorteilhaft, die bei einer von der Anzahl der Zylinder und der Motordrehzahl abhängigen Frequenz ein Vibrationsmaximum aufweisen. . Diese Vibrationen können durch verstellbare Hydrolager besonders effektiv vom Chassis isoliert werden. Die Verstelleinrichtung arbeitet kontinuierlich, so dass eine Vielzahl von Kanal-Positionen angesteuert werden können. Dies setzt eine aufwendige Wegsensierung und Wegregelung in der Verstelleinrichtung voraus.

### Darstellung der Erfindung

Der Erfindung liegt die Aufgabe zugrunde ein Hydrolager mit veränderlichem Tilgerpunkt bereit zu stellen, welches kostengünstig ist und einfach von der Motorelektronik angesteuert werden kann.

Diese Aufgabe wird mit den Merkmalen von Anspruch 1 gelöst. Auf vorteilhafte Ausgestaltungen nehmen die Unteransprüche Bezug.

Zur Lösung der Aufgabe ist die Verstelleinrichtung in nur zwei Schaltstellungen verfahrbar- Dadurch entfällt die Wegsensierung, da die Verstelleinrichtung lediglich zwischen zwei Endlagen pendelt und es daher nicht erforderlich ist, die momentane Position der Verstelleinrichtung zu erfassen. Die zwei Schaltstellungen können zwei verschiedenen Kanalpositionen zugeordnet sein, die wiederum bestimmten Tilgerpunkten zugeordnet sind. Tilgerpunkt im Sinne dieser Anmeldung bedeutet die Frequenz, bei der durch Resonanzeffekte im Hydrolager die dynamische Steifigkeit minimiert wird. Durch die Wahl von zwei Schaltstellungen ist es möglich, den Tilgerpunkt des Hydrolagers durch Änderung der Schaltstellung zu variieren und dadurch die Funktion des Hydrolagers besser den Anforderungen an die Schwingungsdämpfung und Schwingungsentkopplung des zu lagernden Maschinenelementes anpassen zu können. Insbesondere ist es möglich, die Charakteristik des Hydrolagers so zu wählen, dass sich bis in höhere Frequenzbereiche eine geringe dynamische Steifigkeit des Hydrolagers ergibt und die oberhalb dieser Frequenz entstehende Überhöhung der dynamischen Steifigkeit durch Änderung der Schaltstellung der Verstelleinrichtung zu unterdrücken. Es ist auch möglich, die Schaltstellung über dem gesamten Anregungsspektrum, d.h. dem Drehzahlbereich des Motors, des Hydrolagers mehrfach zu ändern. Die beiden Schaltstellungen werden vorteilhafterweise durch mechanische Anschläge in der Verstelleinrichtung repräsentiert. Es ist allerdings auch möglich, die Schaltstellungen über eine elektromechanische Wegsensierung anzufahren. Der Erhalt der Schaltstellung kann durch Selbsthemmung oder durch Einwirken eines geringen Haltestroms sicher gestellt sein.

Die Verstelleinrichtung kann ein Ventil aufweisen, durch das der Querschnitt und/oder die Länge des Kanals veränderbar sind. Dabei kann das Ventil insbesondere als Kegelventil mit einem variablen Durchlassquerschnitt ausgebildet sein. Durch eine dem Ventil kongruent ausgebildete Gegenfläche die dem Ventil gegenüber liegt ergibt sich ein Kanal, der als Ringkanal ausgebildet ist. Dieser ist kegelstumpfförmig und weist eine variable Breite und Länge auf, die zu einer günstigen Strömungsführung und einer wirksamen Dämpfung führt. Durch Änderung des Abstandes zwischen Ventil und Gegenfläche ändert sich der Durchlassquerschnitts des Kanals und dadurch das Tilgerverhalten des Hydrolagers.

Der Kanal kann die beiden Räume in beiden Schaltstellungen strömungsleitend verbinden. Das bedeutet, dass der Kanal in beiden Schaltstellungen nicht vollständig verschlossen ist. Somit kann in beiden Schaltstellungen die Dämpfungsflüssigkeit zwischen beiden Räumen oszillieren. Jedoch verändert sich je nach Schaltstellung der Querschnitt des Kanals, so dass sich die Charakteristik des Hydrolagers ändert.

Die Verstelleinrichtung kann mit einer den zweiten Raum begrenzenden drucklos Volumen aufnehmenden Membran verbunden sein. Die Verstelleinrichtung kann die Membran durchdringen, so dass die Verstelleinrichtung einfach anzuschließen ist. Dazu kann die Membran dichtend an die Verstelleinrichtung angebunden sein, wobei sich die Membran mit der Verstelleinrichtung bewegt.

Die Verstelleindchtung kann einen weiteren Federkörper umfassen. Der Federkörper kann kegelstumpfförmig ausgebildet sein und in einer Richtung vorgespannt sein, so dass die Verstelleinrichtung durch den Federkörper in einer Schaltstellung fixiert ist und ein Antrieb die Verstelleinrichtung gegen die Kraft der Feder in die andere Schaltstellung bewegt. Dadurch ist es lediglich erforderlich, eine Schaltkraft nur in einer Richtung aufzubringen, wodurch sich der Aufbau nochmals vereinfacht. Der weitere Federkörper kann auch eine in die Verstelleinrichtung integrierte Schrauben-freilerfeder sein oder aus einem Elastomerkörper gebildet sein. Der weitere Federkörper kann ein bistabiles Verhalten aufweisen, so dass die Verstelleinrichtung stabil durch den weiteren Federkörper in beiden Schaltstellungen gehalten wird.

Die Verstelleinrichtung kann einen elektromechanischen oder elektromagnetischen Antrieb umfassen. Derartige Antriebe sind beispielsweise Elektromotoren, umpolbare Elektromotoren, ein elektromagnetischer Antrieb oder ein magnetischer Antrieb, beispielsweise ein Zugmagnet oder eine Kombination mit Spule und Permanentmagnet. Derartige Antriebe sind robust und einfach anzubinden.

Die Verstelleinrichtung kann einen hydraulischen oder pneumatischen Antrieb umfassen. Dazu ist die Verstelleinrichtung mit einer Druckdose verbunden, die mit einer Flüssigkeit oder einem Gas beaufschlagt werden kann- Je nach Druck wird die Verstelleinrichtung in einer der beiden Schaltstellungen bewegt. Dabei kann der weitere Federkörper als Membran in der Druckdose fungieren und dabei je nach Druck die Verstelleinrichtung von einer in die andere Schaltstellung bewegen.

In dem ersten Raum kann eine Membran beweglich angeordnet sein, deren Beweglichkeit in einer Schaltstellung eingeschränkt sein kann. Diese Membran bildet einen Teil eines Dämpfungssystems, welches dazu noch einen Dämpfungskanal, möglicherweise mit einem variablen Querschnitt sowie ein Düsensystem umfassen kann. Derartige Einrichtungen verbessern das Dämpfungsverhalten in besonders störenden Frequenzbereichen. Die Funktion des Dämpfungssystems und insbesondere der Membran wird durch den Kanal mit veränderlichem Querschnitt beeinflusst.

Die Membran kann über ein mit der Verstelleinrichtung verbundenes Stellelement beeinflussbar sein. Dieses Stellelement kann je nach Wirkrichtung ein Zuganker oder ein Stößel, also ein starres Element, sein, welches die Membran in einer bestimmten Schaltstellung in eine der Anlagen fixiert, so dass die Membran in dieser Schaltstellung unbeweglich ist. Das Stellelement kann auch als elastisches Element ausgebildet sein. Es ist auch möglich, die Membran und den Kanal mit der Verstelleinrichtung so anzuordnen, dass sich in einer Schaltstellung zwischen Membran und Stellelement ein schmaler Spalt bildet in dem die Membran die Dämpfungsflüssigkeit nicht verdrängen kann, wodurch die freie Beweglichkeit der Membran blockiert oder behindert ist. Allen Ausgestaltungen liegt die Aufgabe zugrunde, die Membran in einer Anlage festzusetzen und sich dadurch keine Resonanzschwingung in der strömungsführenden Einrichtung, in welcher die Membran angeordnet ist, ausbilden kann die zu einer Überhöhung der dynamischen Steifigkeit des Hydrolagers führt. Dazu kann die Membran durch Ziehen in der unteren Anlage oder durch Drücken in der oberen Anlage festgesetzt werden oder durch einen engen Spalt zum Stellelement das darin befindliche Fluid stark gedämpft werden. Vorteilhafterweise ist eine Schaltstellung der Verstelleinrichtung einer Resonanzfrequenz des Hydrolagers zugeordnet und in der zweiten Schaltstellung ist die Membran blockiert.

### Kurzbeschreibung der Zeichnung

Einige Ausführungsbeispiele des erfindungsgemäßen Hydrolagers werden nachfolgend anhand der Figuren näher erläutert. Diese zeigen, jeweils schematisch:
- Fig. 1a: ein Hydrolager in einer ersten Schaltstellung;
- Fig. 1b: ein Hydrolager in einer zweiten Schaltstellung;
- Fig. 2a: ein Hydrolager mit Stellelement ausgebildet als Zuganker zur Blockade der Membran in einer ersten Schaltstellung;
- Fig. 2b: ein Hydrolager mit Stellelement ausgebildet als Zuganker zur Blockade der Membran in einer zweiten Schaltstellung;
- Fig. 3a: ein Hydrolager mit Stellelement ausgebildet als Stößel zur Blockade der Membran in einer ersten Schaltstellung;
- Fig. 3b: ein Hydrolager mit Stellelement ausgebildet als Stößel zur Blockade der Membran in einer zweiten Schaltstellung;.
- Fig. 4a: ein Hydrolager mit Membran und Verstelleineichtung die in geringem Abstand zueinander angeordnet sind in einer ersten Schaltstellung;
- Fig. 4b: ein Hydrolager mit Membran und Verstelleinrichtung die in geringem Abstand zueinander angeordnet sind in einer zweiten Schaltstellung;
- Fig. 5: ein Hydrolager mit Verstelleinrichtung angetrieben durch einen Zugmagneten;
- Fig. 6: ein Hydrolager mit Verstelleinrichtung angetrieben durch einen Elektromotor mit Getriebe;
- Fig. 7: im Diagramm der Verlauf der dynamischen Steifigkeit über der Frequenz eines erfindungsgemäßen Hydrolagers.

### Ausführung der Erfindung

Die Figuren zeigen ein Hydrolager 1 zur Lagerung von Aggregaten, insbesondere Kraftfahrzeugmotoren. Das Hydrolager 1 besteht aus einem Gehäuse, welches das Auflager 2 bildet und einem Traglager 3. Das Auflager 2 und das Traglager 3 sind durch einen Federkörper 4 miteinander verbunden und begrenzen einen mit Dämpfungsflüssigkeit befüllten ersten Raum 5, wobei der erste Raum 5 strömungsleitend über einen durch eine Verstelleinrichtung 6 verstellbaren Kanal 7 mit einem zweiten Raum 8 verbunden ist, welcher ebenfalls mit Dämpfungsflüssigkeit befüllt ist. Der zweite Raum 8 ist ferner durch eine drucklos Volumen aufnehmende erste Membran 10 begrenzt, wobei die erste Membran 10 mit der Verstelleinrichtung 6 verbunden ist. Die Verstelleinrichtung 6 umfasst ein Ventil 9 durch das der Querschnitt des Kanals 7 veränderbar ist, wobei der Kanal als Ringkanal ausgebildet ist. Die Verstelleinrichtung ist so ausgebildet, dass sie und damit auch das Ventil 9 in nur zwei Schaltstellungen verfahrbar ist, als Ventilstellung also zwei Endlagen anwählbar sind. Das Ventil 9 und die Verstelleinrichtung 6 sind so ausgebildet, dass der Kanal 7 die beiden Räume 5, 8 in beiden Schaltstellungen strömungsleitend miteinander verbindet.

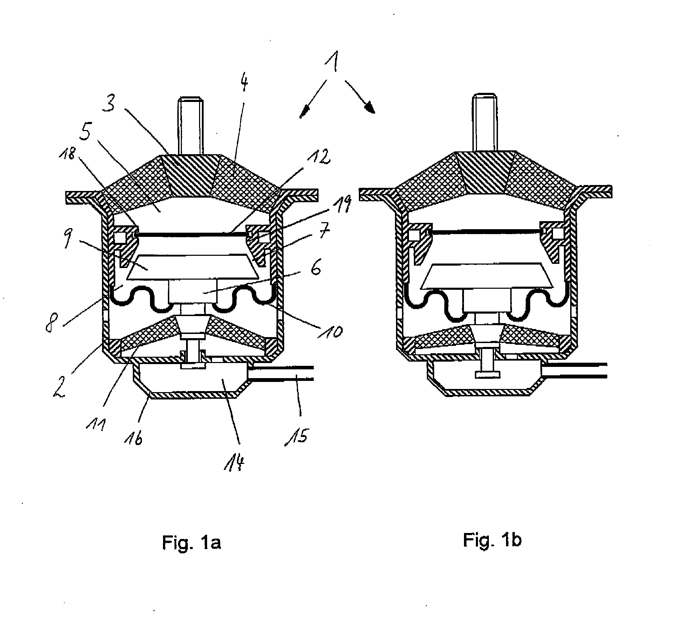

Figur 1a zeigt ein Hydrolager 1 in einer ersten Schaltstellung. Die Verstelleinrichtung 6 umfasst einen weiteren Federkörper 11 der kegelstumpfförmig ausgebildet ist und die Verstelleinrichtung 6 mit Vorspannung in der ersten Schaltstellung fixiert. Der weitere Federkörper 11 bildet eine Membran und begrenzt zusammen mit einer Druckdose 16 einen weiteren Raum 14, der mit einer Druckleitung 15 verbunden ist. Nimmt in dem weiteren Raum 14 der Druck ab, bewegt sich der weitere Federkörper 11 und schaltet die Verstelleinrichtung 6 nach unterschreiten eines vorgewählten Drucks das Ventil 9 vollständig in die zweite Schaltstellung um. In dem ersten Raum 5 ist eine Membran 12 zwischen zwei Anlagen 18, 9 beweglich angeordnet.

Figur 1b zeigt das zuvor beschriebene Hydrolager 1 in der zweiten Schaltstellung.

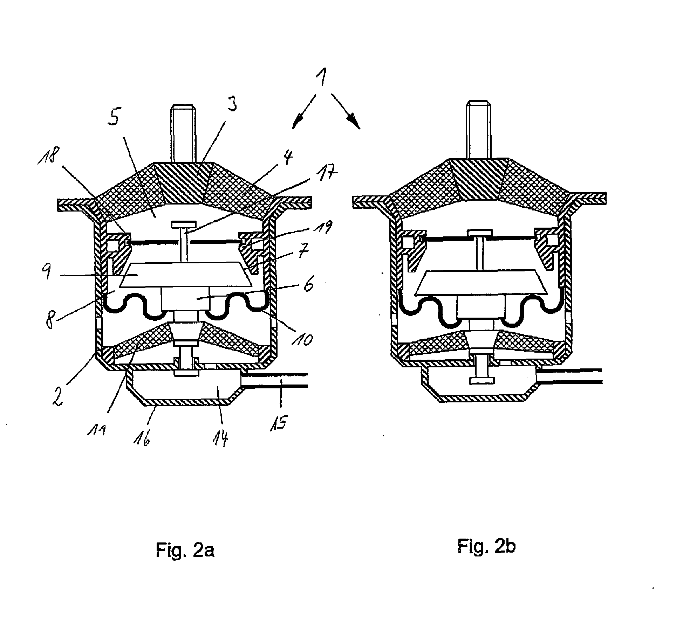

Figur 2a zeigt ein Hydrolager 1 gemäß Figur 1a, welches mit einem Stellelement 13 ausgerüstet ist durch das die Membran 12 in einer Anlage 18 fixierbar ist. Dazu weist die Membran 12 eine Durchbrechung 17 auf, durch die das Stellelement 13 ausgebildet als Zuganker hindurch ragt, so dass die Membran 12 in der ersten Schaltstellung frei beweglich ist.

Figur 2b zeigt das Hydrolager 1 gemäß Figur 2a in zweiten Schaltstellung. In dieser Schaltstellung liegt das Stellelement 13 an der Membran 12 an und blockiert diese in deren unterer Anlage. In dieser Ausgestaltung ist das Stellelement 13 starr ausgebildet. Es ist aber auch denkbar, das Stellelement 13 elastisch auszubilden.

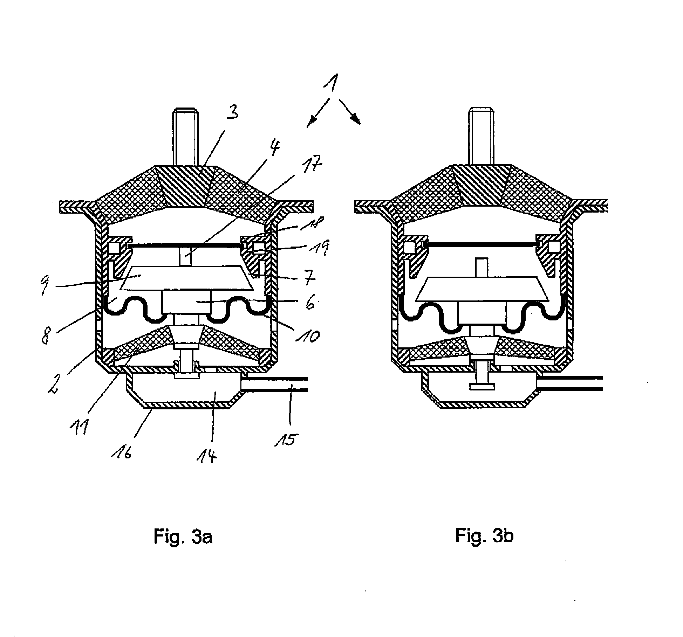

Figur 3a zeigt ein Hydrolager 1 gemäß Figur 1a, welches mit einem Stellelement 13 ausgerüstet ist durch das die Membran 12 in einer Anlage 18 fixierbar ist. Das Stellelement 13 ist als Stößel ausgebildet und gelangt zur Anlage an die Membran 12 und blockiert diese, wenn sich die Verstelleinrichtung 6 in der ersten Schaltstellung befindet

Figur 3b zeigt das Hydrolager 1 gemäß Figur 3a in zweiten Schaltstellung. In dieser Schaltstellung ist das Stellelement 13 von der Membran 12 beabstandet, so dass die Membran 12 in der zweiten Schaltstellung frei beweglich ist. Das Stellelement 13 ist vorzugsweise als Elastomerkörper ausgebildet.

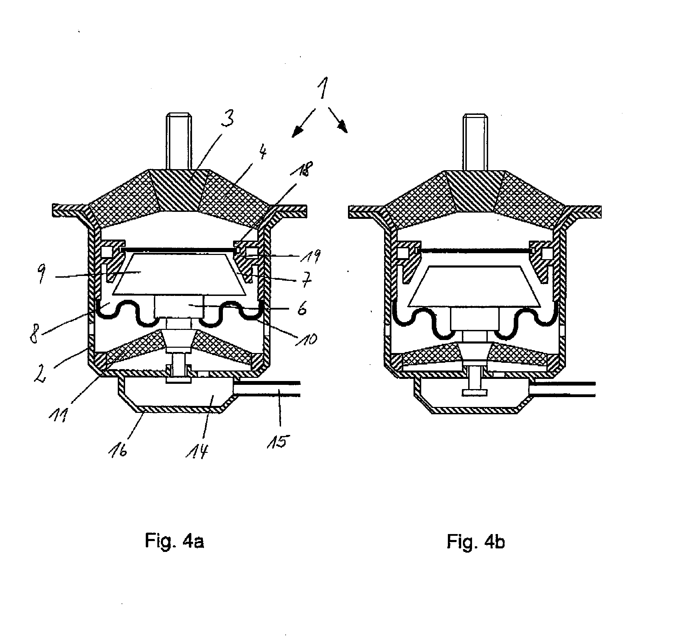

Figur 4a zeigt ein Hydrolager 1 gemäß Figur 1a, bei dem die Verstelleinrichtung und die Membran 12 so zueinander angeordnet sind, dass sich in der ersten Schaltstellung nur ein geringer Abstand zwischen Membran 12 und Verstelleinrichtung 6 ausbildet. Durch den geringen Abstand kann die Membran 12 die zwischen Membran 12 und Verstelleinrichtung 6 befindliche Flüssigkeit nicht verdrängen, so dass die Membran in ihrer Beweglichkeit behindert ist.

Figur 4b zeigt das Hydrolager 1 gemäß Figur 4a in zweiten Schaltstellung. In dieser Schaltstellung sind die Membran 12 und die Verstelleinrichtung 6 beabstandet, so dass die Membran 12 in der zweiten Schaltstellung frei beweglich ist.

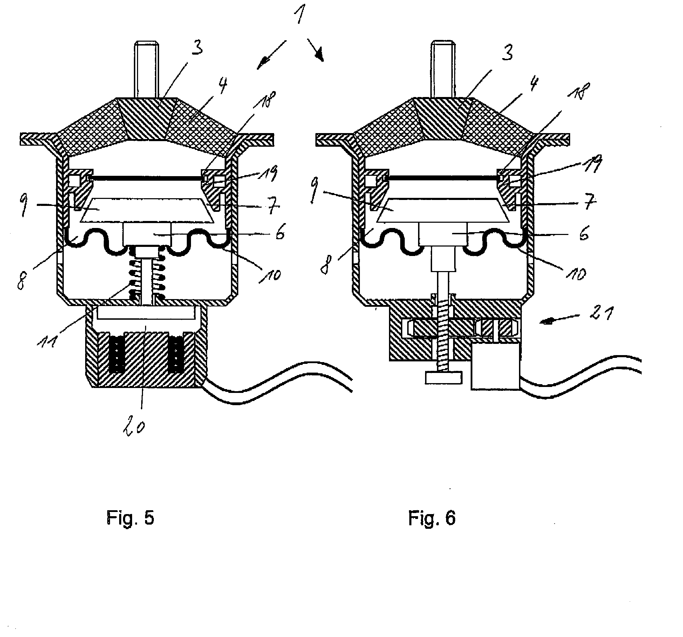

Figur 5 zeigt ein Hydrolager 1 in einer ersten Schaltstellung. Die Verstelleinrichtung 6 wird durch einen elektromagnetischen Antrieb, hier ein Zugmagnet 20 von einer Schaltstellung in die andere bewegt. Darüber hinaus umfasst die Verstelleinrichtung 6 einen weiteren Federkörper 11 der hier als Schraubenfeder ausgebildet ist und die Verstelleinrichtung 6 mit Vorspannung in der ersten Schaltstellung fixiert.

Figur 6 zeigt ein Hydrolager 1 in einer ersten Schaltstellung. Die Verstelleinrichtung 6 wird durch einen elektromagnetischen Antrieb, hier ein Elektromotor mit einem Getriebe 21 mit Selbsthemmung, von einer Schaltstellung in die andere bewegt. Es kann zusätzlich ein weiterer Federkörper 11 vorgesehen sein. Durch den weiteren Federkörper 11 kann der Antrieb der Verstelleinrichtung 6 spielfrei vorgespannt werden.

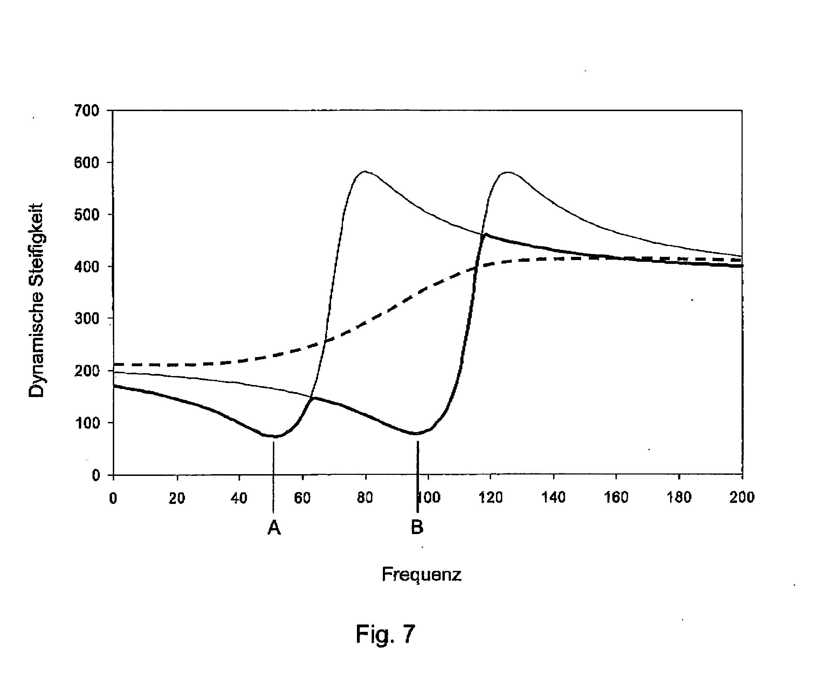

Figur 7 zeigt ein Diagramm in dem der Verlauf der dynamischen Steifigkeit eines erfindungsgemäßen Hydrolagers 1 über der Anregungsfrequenz aufgetragen ist. Es ist zu erkennen, dass die dynamische Steifigkeit beginnend bei kleinen Frequenzen zunächst abnimmt und bei A ein erstes Minimum erreicht. Dies ist der erste Tilgerpunkt des Hydrolagers 1, der einer kritischen Frequenz des Kraftfahrzeugs zugeordnet ist, in dem das Hydrolager 1 montiert ist. Aufgrund der geringen dynamischen Steifigkeit erfolgt eine optimale Schwingungsentkopplung zwischen Auflager 2 und Traglager 3. Im Anschluss an den ersten Tilgerpunkt A steigt die dynamische Steifigkeit an, wobei durch die Verstelleinrichtung bei etwa 60 Hz die Schaltstellung gewechselt wird und durch die geänderten Strömungsbedingungen im Hydrolager 1 die dynamische Steifigkeit wieder abnimmt bis ein weiteres Minimum, der zweite Tilgerpunkt B erreicht wird. Auch der zweite Tilgerpunkt B ist einer kritischen Frequenz des Kraftfahrzeugs zugeordnet. Im Anschluss an den zweiten Tilgerpunkt B steigt die dynamische Steifigkeit erneut an, wobei bei etwa 120 Hz erneut die Schaltstellung gewechselt wird, wodurch die dynamische Steifigkeit wieder sinkt und das Durchfahren einer Überhöhung vermieden wird.

## Patentansprüche

1. Hydrolager (1), umfassend ein Auflager (2) und eine Traglager (3), die durch einen Federkörper (4) miteinander verbunden sind und einen mit Dämpfungsflüssigkeit befüllten ersten Raum (5) begrenzen, wobei der erste Raum (5) über einen durch eine Verstelleinrichtung (6) verstellbaren Kanal (7) mit einem zweiten Raum (8) verbunden ist, **dadurch gekennzeichnet, dass** die Verstelleinrichtung (6) in nur zwei Schaltstellungen verfahrbar ist.

2. Hydrolager nach Anspruch 1, **dadurch gekennzeichnet, dass** beide Schaltstellungen einer Resonanzfrequenz des Hydrolagers (1) zugeordnet sind.

3. Hydrolager nach Anspruch 1 oder 2, **dadurch gekennzeichnet, dass** der Kanal (7) die beiden Räume (5, 8) in beiden Schaltstellungen strömungsleitend verbindet.

4. Hydrolager nach einem der Ansprüche 1 bis 3, **dadurch gekennzeichnet, dass** die Verstelleinrichtung (6) einen weiteren Federkörper (11) umfasst.

5. Hydrolager nach einem der Ansprüche 1 bis 4, **dadurch gekennzeichnet, dass** die Verstelleinrichtung (6) einen elektromechanischen oder elektromagnetischen Antrieb (12) umfasst.

6. Hydrolager nach einem der Ansprüche 1 bis 4, **dadurch gekennzeichnet, dass** die Verstelleinrichtung einen hydraulischen oder pneumatischen Antrieb (12) umfasst.

7. Hydrolager nach Anspruch 6, **dadurch gekennzeichnet, dass** der weitere Federkörper (11) als Membran in dem Antrieb (12) fungiert.

8. Hydrolager nach einem der Ansprüche 1 bis 7, **dadurch gekennzeichnet, dass** in dem ersten Raum (5) eine Membran (12) beweglich angeordnet ist, deren Beweglichkeit in einer Schaltstellung eingeschränkt ist.

9. Hydrolager nach Anspruch 8, **dadurch gekennzeichnet, dass** die Bewegung der Membran (12) durch einmit der Verstelleinrichtung (6) verbundenes Stellelement (13) beeinflussbar ist.

10. Hydrolager nach Anspruch 9, **dadurch gekennzeichnet, dass** das Stellelement (13) als Zuganker ausgebildet ist

11. Hydrolager nach Anspruch 9, **dadurch gekennzeichnet, dass** das Stellelement (13) als Stößel ausgebildet ist.

12. Hydrolager nach Anspruch 9, **dadurch gekennzeichnet, dass** die Membran (12) und die Verstelleinrichtung (6) so zueinander angeordnet sind, dass die Beweglichkeit der Membran (12) in einer Schaltstellung eingeschränkt ist.
